# EUROPEAN PATENT SPECIFICATION

(11) **EP 4 455 498 B1**
(45) Date of publication and mention of the grant of the patent: **04.02.2026**
(21) Application number: 23870073.6
(22) Date of filing: 24.08.2023
(51) Int. Cl.: G06F 1/16, H04M 1/02, F16C 11/04, G09F 9/30

(54) **ROTATING SHAFT ASSEMBLY AND TERMINAL DEVICE**
DREHWELLENANORDNUNG UND ENDGERÄTEVORRICHTUNG
ENSEMBLE ARBRE ROTATIF ET ÉQUIPEMENT TERMINAL

(30) Priority: 27.09.2022 CN 202211185813
(43) Date of publication of application: 30.10.2024
(73) Proprietor: Honor Device Co., Ltd., Shenzhen, Guangdong 518040 (CN)
(72) Inventor: YAN, Bin, Shenzhen, Guangdong 518040 (CN); ZHANG, Yaolei, Shenzhen, Guangdong 518040 (CN); GAO, Mingqian, Shenzhen, Guangdong 518040 (CN)
(74) Representative: Beder, Jens
(86) International application number: PCT/CN2023/114675
(87) International publication number: WO 2024/066830

(56) References cited:
- EP-A1- 3 734 946
- CN-A- 113 067 924
- CN-A- 114 500 699
- CN-A- 115 013 421
- US-A1- 2011 078 876

## Description

This application claims priority to Chinese patent application No. 202211185813.3, filed with the China National Intellectual Property Administration on September 27, 2022 and entitled "ROTATING SHAFT ASSEMBLY AND TERMINAL DEVICE".

### TECHNICAL FIELD

This application relates to the field of rotating shaft technologies, and in particular, to a rotating shaft assembly and a terminal device.

### BACKGROUND

A rotating shaft assembly is an important component in a terminal device with a foldable screen effect, such as a mobile phone or a tablet computer. In a related technology, a rotating shaft assembly includes a base and a swing arm that is rotatably connected to the base. To enable the swing arm and the base to have relatively good rigidity, a thickness of the base and a thickness of the swing arm are relatively large, and consequently, an overall thickness and an overall volume of the rotating shaft assembly are relatively large, and relatively large space is occupied when the rotating shaft assembly is used in the terminal device. Document EP 3 734 946 A1 describes a hinge structure and an electronic device including the hinge structure. Document CN 115 013 421 A describes a folding mechanism and a terminal equipment.

### SUMMARY

Embodiments of this application are to provide a rotating shaft assembly and a terminal device, to reduce a thickness and a volume of the rotating shaft assembly and reduce a space occupancy rate of the rotating shaft assembly in the terminal device. The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

An embodiment of a first aspect of this application provides a rotating shaft assembly, and the rotating shaft assembly includes:
a base, where the base includes a first portion and a second portion that are fixedly connected, and a first sliding groove is formed between the first portion and the second portion; and
a swing arm, where the swing arm includes a rotating part and a swinging part, the rotating part is slidably connected to the first sliding groove, and when the rotating part slides relative to the first sliding groove, the swinging part rotates relative to the base; where
the rotating part includes at least one first surface and at least one second surface, the at least one first surface is disposed opposite to a side surface of the first portion, the at least one second surface is disposed opposite to a side surface of the second portion, and along a rotation axis of the swinging part, at least a portion of the first surface and at least a portion of the second surface are staggered.

In some embodiments, there are at least two swing arms, the at least two swing arms include a first swing arm and a second swing arm, and a swinging part of the first swing arm and a swinging part of the second swing arm are disposed on two sides of the base.

In some embodiments, the rotating shaft assembly further includes a shaft cover, and the shaft cover is connected to the base.

In some embodiments, the rotating part includes two first surfaces, and the at least one second surface is located between the two first surfaces along the rotation axis of the swinging part.

In some embodiments, the first portion includes a first body part and two connecting parts located on two sides of the first body part, each connecting part includes two pressing blocks, each first surface is disposed opposite to a third surface of one pressing block, and the third surface is a side surface that is of the pressing block and that faces the second portion.

In some embodiments, each connecting part further includes a connecting member, and the connecting member is connected to the two pressing blocks.

In some embodiments, the connecting member is in a strip shape, a first strip groove is disposed on a side surface that is of the rotating part and that is away from the shaft cover, the first strip groove extends in a length direction of the connecting member, and at least a partial structure of the connecting member is disposed in the first strip groove.

In some embodiments, a first concave part is disposed on a side surface that is of the rotating part and that is away from the rotation axis of the swinging part, at least a partial structure of the pressing block is disposed in the first concave part, and a bottom wall of the first concave part includes the first surface.

In some embodiments, a second concave part is disposed on a side surface that is of the rotating part and that faces the rotation axis of the swinging part, a first convex part is disposed on the second portion, at least a partial structure of the first convex part extends into the second concave part, and a bottom wall of the second concave part includes the second surface.

In some embodiments, a first limiting block is disposed on the bottom wall of the second concave part, and the first limiting block is located on a side that is of the rotating part and that is away from the swinging part; and
a third concave part is disposed on a side surface that is of the first convex part and that faces the second concave part, and at least a partial structure of the first limiting block is disposed in the third concave part.

In some embodiments, a first through hole is disposed on the swinging part, and when at least two swing arms are in an unfolded state, an end part of the second portion extends into the first through hole in a thickness direction of the rotating shaft assembly.

In some embodiments, a swinging part of the first swing arm and a swinging part of the second swing arm are symmetrically disposed on two sides of the base.

In some embodiments, both the at least one first surface and the at least one second surface are arc-shaped surfaces.

In some embodiments, both the at least one first surface and the at least one second surface are circular arc surfaces, and a central axis of the at least one first surface coincides with a central axis of the at least one second surface.

In some embodiments, a thickness of the rotating part varies in a radial direction.

In some embodiments, at least a partial structure of the rotating part is disposed in the first sliding groove.

In some embodiments, the first portion and the second portion are an integral structure.

In some embodiments, a manner of connecting the first portion and the second portion includes at least one of a welding connection, a bonding connection, a screw connection, and a nut connection.

An embodiment of a second aspect of this application provides a terminal device. The terminal device includes a housing, a flexible display screen, and the rotating shaft assembly according to any item above, where the flexible display screen is connected to the housing, the flexible display screen includes a bending region, the rotating shaft assembly is located on a non-display side of the flexible display screen, and the rotating shaft assembly is disposed in a correspondence with the bending region.

In some embodiments, the terminal device is a terminal device with a foldable screen.

Beneficial effects of embodiments of this application are as follows:
In the rotating shaft assembly provided in the embodiments of this application, the first sliding groove is formed between the first portion and the second portion of the base, and the rotating part of the swing arm is slidably connected to the base by using the first sliding groove. The swinging part is disposed outside the first sliding groove, and the swinging part rotates relative to the base in a process in which the rotating part slides relative to the first sliding groove. Because at least a portion of the first surface and at least a portion of the second surface are staggered along the rotation axis of the swinging part, that is, the first surface and the second surface are located at different positions of the rotating part, the rotating shaft assembly is subjected to external force, and when the rotating part is in contact with the first portion or the second portion, a force-bearing surface of the rotating part relative to the first portion and a force-bearing surface of the rotating part relative to the second portion are located at different positions, and therefore, force borne by the rotating part, force borne by the first portion, and force borne by the second portion are relatively scattered, so that force borne by the rotating part on the first surface and the second surface is relatively small, and force borne by a side surface that is of the first portion and that is opposite to the first surface and force borne by a side surface that is of the second portion and that is opposite to the second surface are relatively small. Therefore, rigidity of the rotating shaft assembly does not need to be increased by increasing a thickness of the swing arm, a thickness of the first portion, and a thickness of the second portion, so that a thickness and a volume of the rotating shaft assembly can be reduced, and a space occupancy rate of the rotating shaft assembly in the terminal device can be reduced.

Certainly, any product or method for implementing this application does not necessarily need to simultaneously achieve all the foregoing advantages.

### BRIEF DESCRIPTION OF DRAWINGS

To describe technical solutions of embodiments of this application or the prior art more clearly, the following briefly describes the accompanying drawings that need to be used for describing the embodiments or the prior art. Apparently, the accompanying drawings in the following descriptions are merely some embodiments of this application, and a person of ordinary skill in the art may still derive other embodiments based on these accompanying drawings.
FIG. 1 is a diagram of a structure of a terminal device according to some embodiments of this application;
FIG. 2 is a diagram of a structure of a rotating shaft assembly in an unfolded state according to some embodiments of this application;
FIG. 3 is a diagram of a structure of a rotating shaft assembly in a closed state according to some embodiments of this application;
FIG. 4 is a diagram of an exploded structure of a rotating shaft assembly according to some embodiments of this application;
FIG. 5 is a cross-sectional view of a rotating shaft assembly in a direction A-A in FIG. 2;
FIG. 6 is a cross-sectional view of a rotating shaft assembly in an unfolded state in a direction B-B in FIG. 2 according to some embodiments of this application;
FIG. 7 is a cross-sectional view of a rotating shaft assembly in a closed state in a direction B-B in FIG. 2 according to some embodiments of this application;
FIG. 8 is a cross-sectional view of a rotating shaft assembly in an unfolded state in a direction C-C in FIG. 2 according to some embodiments of this application;
FIG. 9 is a cross-sectional view of a rotating shaft assembly in a closed state in a direction C-C in FIG. 2 according to some embodiments of this application;
FIG. 10 is a diagram of another structure of a rotating shaft assembly according to some embodiments of this application;
FIG. 11 is a cross-sectional view of the rotating shaft assembly in FIG. 10 in a direction A'-A';
FIG. 12 is a cross-sectional view of the rotating shaft assembly in FIG. 10 in a direction C'-C';
FIG. 13 is a front view of a rotating shaft assembly according to some embodiments of this application;
FIG. 14 is a diagram of a structure of a base according to some embodiments of this application;
FIG. 15 is a diagram of a structure of a swing arm according to some embodiments of this application;
FIG. 16 is a diagram of another structure of a swing arm according to some embodiments of this application;
FIG. 17 is a diagram of a structure of another swing arm according to some embodiments of this application;
FIG. 18 is a diagram of a partial structure of a base according to some embodiments of this application;
FIG. 19 is a diagram of a structure of still another swing arm according to some embodiments of this application;
FIG. 20 is a diagram of a structure of a swing arm mounted on a terminal device shown in FIG. 19; and
FIG. 21 is a diagram of a structure of a swing arm in a comparison example.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. Based on the embodiments of this application, all other embodiments obtained by a person of ordinary skill in the art based on this application fall within the protection scope of this application.

It should be understood that the terms used herein are intended only for the purpose of describing specific example implementations and are not intended to be limited. As used herein, the singular forms "a", "an", and "the" are intended to include the plural forms as well, unless the context clearly indicates otherwise. The terms "include", "comprise", "contain", and "have" are inclusive and therefore indicate the existence of a stated feature, step, operation, element, and/or component, but do not rule out the existence or addition of one or more other features, steps, operations, elements, components, and/or combinations thereof. The method steps, processes, and operations described herein are not to be construed as requiring them to be executed in the specified order described or illustrated, unless the order of execution is explicitly indicated. It should also be understood that an additional or alternative step may be used.

It should be understood that although terms such as first, second, and third are used in this specification to describe various elements, components, regions, layers, and/or segments, the elements, components, regions, layers, and/or segments are not limited by these terms. These terms are merely used to distinguish one element, component, region, layer, or segment from another element, component, region, layer, or segment. Terms such as "first" and "second" and other numeric terms are not intended to imply a sequence or an order when being used in this specification unless expressly stated by the context. Therefore, a first element, component, region, layer, or segment discussed below may be referred to as a second element, component, region, layer, or segment without departing from the teachings of the example implementations.

For ease of description, a spatial relational term may be used in this specification to describe a relationship between one element or feature shown in the figure and another element or feature. These relational terms are, for example, "interior", "exterior", "inner side", "outer side", "under", "below", "on, and "above". It should be understood that such spatial relational terms are intended to include different orientations of a used or operated apparatus in addition to orientations depicted in the figures. For example, if the apparatus in the figure is reversed, an element described as "under another element or feature" or "below another element or feature" is then directed to "on another element or feature" or "above another element or feature". Therefore, an example term "below ..."may be included in orientations "on" and "under". The apparatus may be otherwise directed, for example, is rotated by 90 degrees or in another direction, and a spatial relative relationship descriptor used herein is correspondingly explained.

To reduce a thickness and a volume of a rotating shaft assembly and reduce a space occupancy rate of the rotating shaft assembly in a terminal device, embodiments of this application provide a rotating shaft assembly and a terminal device. The rotating shaft assembly and the terminal device that are provided in the embodiments of this application are described in detail below with reference to the accompanying drawings. The rotating shaft assembly may be used in a terminal device with a foldable screen effect, such as a mobile phone, a tablet computer, a notebook computer, and a watch, and the rotating shaft assembly may be further used in another device that uses a rotating shaft or a hinge. This is not limited in this application.

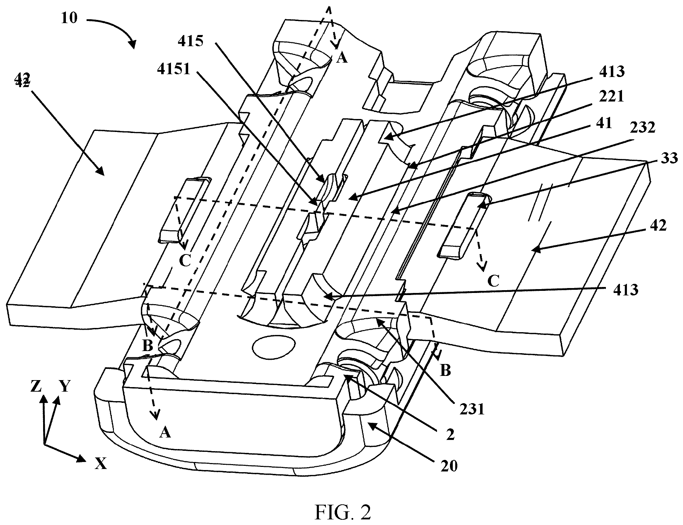

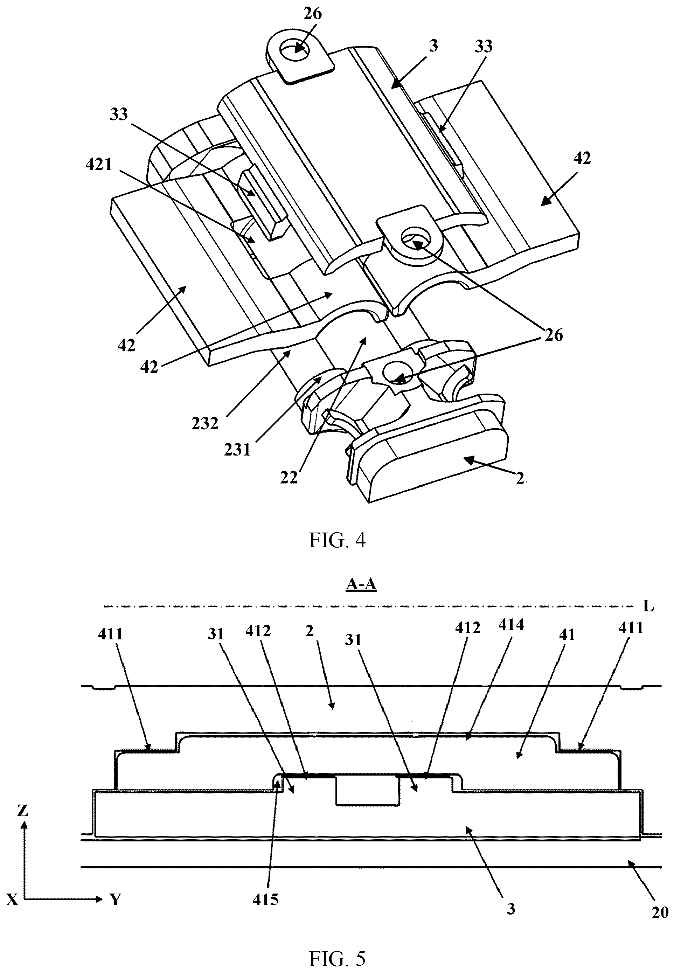

As shown in FIG. 2 to FIG. 14, an embodiment of a first aspect of this application provides a rotating shaft assembly 10. The rotating shaft assembly 10 includes a base 1 and a swing arm 4, the base 1 includes a first portion 2 and a second portion 3 that are fixedly connected, and a first sliding groove 21 is formed between the first portion 2 and the second portion 3. The swing arm 4 includes a rotating part 41 and a swinging part 42. The rotating part 41 is slidably connected to the first sliding groove 21. When the rotating part 41 slides relative to the first sliding groove 21, the swinging part 42 rotates relative to the first portion 2. The rotating part 41 includes at least one first surface 411 and at least one second surface 412, the at least one first surface 411 is disposed opposite to a side surface of the first portion 2, the at least one second surface 412 is disposed opposite to a side surface of the second portion 3, and as shown in FIG. 5, along a rotation axis L of the swinging part 42, at least a portion of the first surface 411 and at least a portion of the second surface 412 are staggered.

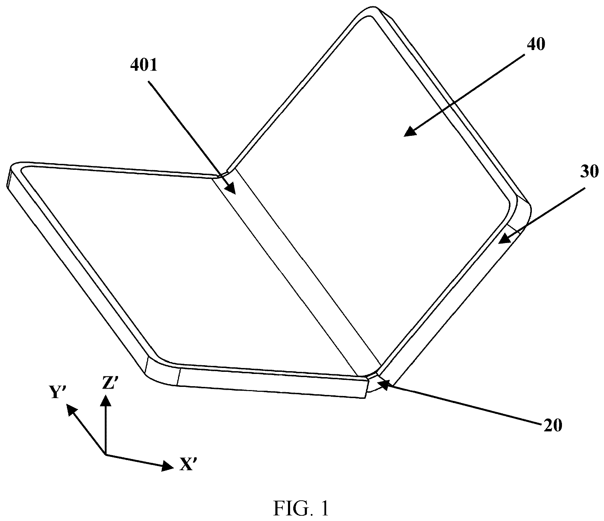

In this embodiment of this application, as shown in FIG. 2, FIG. 3, and FIG. 10, a width direction of the rotating shaft assembly 10 is defined as an X direction, a length direction of the rotating shaft assembly 10 is defined as a Y direction, and a thickness direction of the rotating shaft assembly 10 is defined as a Z direction. An extension direction of the rotation axis L of the swinging part 42 in the rotating shaft assembly 10 is parallel to the length direction Y of the rotating shaft assembly 10, and the extension direction of the rotation axis L of the swinging part 42 in the rotating shaft assembly 10 is perpendicular to the width direction Y and the thickness direction Z of the rotating shaft assembly 10. As shown in FIG. 1 and FIG. 2, when the rotating shaft assembly 10 is mounted on a terminal device, the width direction X of the rotating shaft assembly 10 is a width direction X' of the terminal device, the length direction Y of the rotating shaft assembly 10 is a length direction Y' of the terminal device, and the thickness direction Z of the rotating shaft assembly 10 is a thickness direction Z' of the terminal device. For ease of description, when the rotating shaft assembly 10 is defined to be mounted on a display device, a direction facing a display screen in the display device is up, and a direction away from the display screen in the display device is down.

In this embodiment of this application, along the rotation axis L of the swinging part 42, that is, in the extension direction parallel to the rotation axis L of the swinging part 42, in the at least one first surface 411 and the at least one second surface 412, at least a portion of each first surface 411 and at least a portion of each second surface 412 are staggered. In other words, in the thickness direction Z of the rotating shaft assembly 10, an orthographic projection of the at least one first surface 411 does not overlap or partially overlap an orthographic projection of the at least one second surface 412.

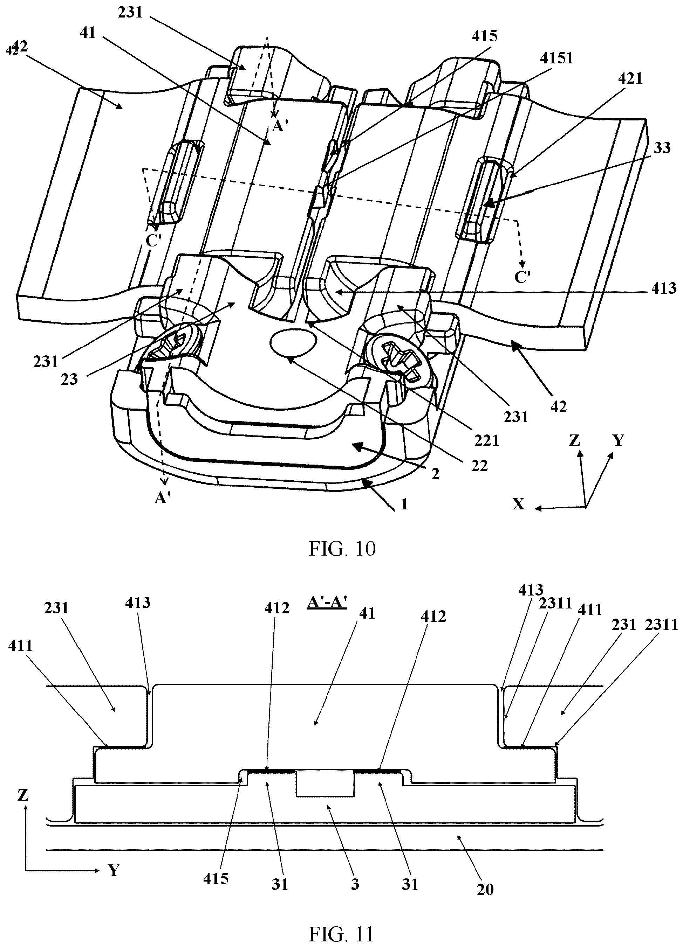

Optionally, as shown in FIG. 5 and FIG. 11, each first surface 411 and each second surface 412 are staggered along the rotation axis L of the swinging part 42; in other words, the orthographic projection of the at least one first surface 411 does not overlap the orthographic projection of the at least one second surface 412 in the thickness direction Z of the rotating shaft assembly 10.

Optionally, a partial structure of each first surface 411 and a partial structure of each second surface 412 are staggered along the rotation axis L of the swinging part 42; in other words, the orthographic projection of the at least one first surface 411 overlaps the orthographic projection of the at least one second surface 412 in the thickness direction Z of the rotating shaft assembly 10. Optionally, in the length direction Y of the rotating shaft assembly 10, an orthographic projection of an edge of the first surface 411 in the thickness direction Z overlaps an orthographic projection of an edge of a second surface 412 adjacent to the first surface 411 in the thickness direction Z.

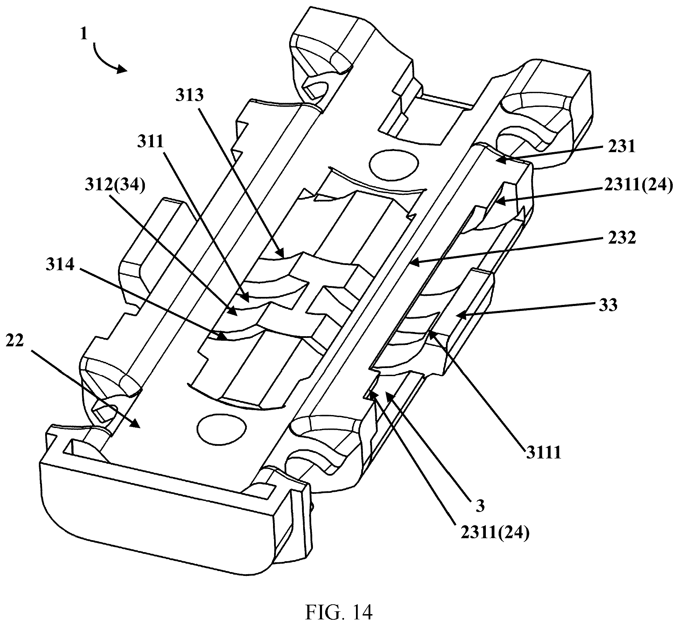

Optionally, both the at least one first surface 411 and the at least one second surface 412 are arc-shaped surfaces. Optionally, as shown in FIG. 14, FIG. 15, FIG. 16, and FIG. 18, the first portion 2 includes a fourth surface 24. In the thickness direction Z, the fourth surface 24 is disposed opposite to the first surface 411; in other words, in the thickness direction Z, an orthographic projection of the fourth surface 24 covers the orthographic projection of the first surface 411. The second portion 3 includes a fifth surface 34. In the thickness direction Z, the fifth surface 34 is disposed opposite to the second surface 412; in other words, in the thickness direction Z, an orthographic projection of the fifth surface 34 covers the orthographic projection of the second surface 412. The first sliding groove 21 is jointly formed by a first sidewall (an upper sidewall) and a second sidewall (a lower sidewall) in the thickness direction Z and two bottom walls in the length direction Y. The fourth surface 24 may be used as the first sidewall of the first sliding groove 21, and the fifth surface 34 may be used as the second sidewall of the first sliding groove 21. The two bottom walls of the first sliding groove 21 are respectively disposed opposite to the two sidewalls of the rotating part 41 in the length direction Y.

The first surface 411 is a region that is on the rotating part 41 and that is in contact with the first portion 2 and exerts upward pressure on the first portion 2 when the swing arm 4 is subjected to external force. For example, when the swing arm 4 is subjected to upward pulling force, the first surface 411 of the rotating part 41 in the swing arm 4 is in contact with the fourth surface 24 of the first portion 2, and upward pressure is exerted on the first portion 2 on the first surface 411. The second surface 412 is a region that is on the rotating part 41 and that is in contact with the second portion 3 and exerts downward pressure on the second portion 3 when the swing arm 4 is subjected to external force. For example, when the swing arm 4 is subjected to downward extrusion force, the second surface 412 of the rotating part 41 in the swing arm 4 is in contact with the fifth surface 34 of the second portion 3, and downward pressure is exerted on the second portion 3 on the second surface 412.

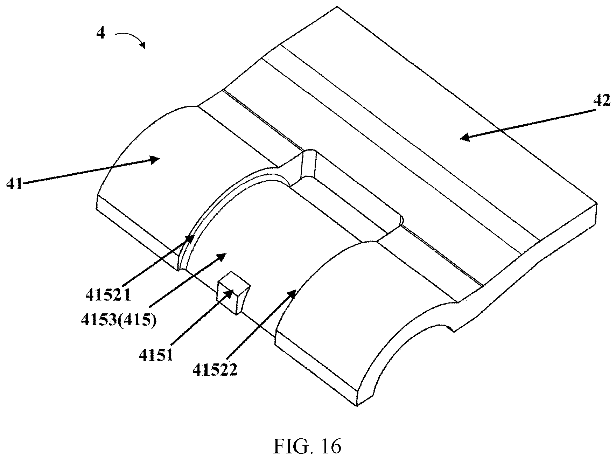

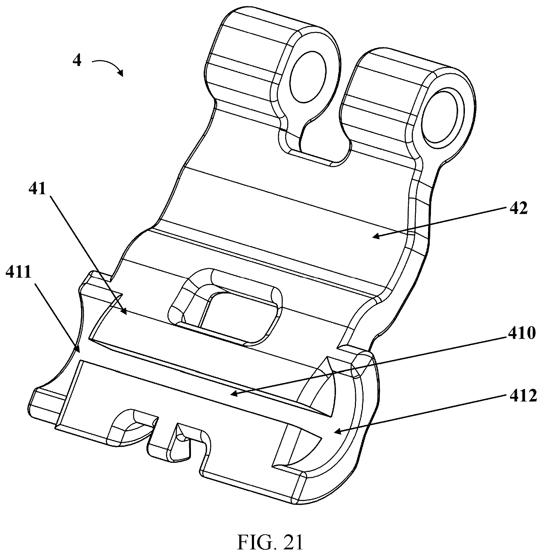

In a comparison example, as shown in FIG. 16, FIG. 18, and FIG. 21, the rotating part 41 includes two first surfaces 411 and a sixth surface 410 that connects the two first surfaces 411. When the swing arm 4 in FIG. 21 is mounted on the base 1, because the two first surfaces 411 are disposed opposite to the fourth surface 24 of the first portion 2, and the sixth surface 410 is not disposed opposite to the fourth surface 24 of the first portion 2, the sixth surface 410 does not meet a definition of the first surface 411 in this application, and the sixth surface 410 does not belong to the first surface 411.

In the rotating shaft assembly 10 provided in this embodiment of this application, because at least a portion of the first surface 411 and at least a portion of the second surface 412 are staggered along the rotation axis L of the swinging part 42, that is, at least one first surface 411 and at least one second surface 412 are located at different positions of the rotating part 41, the rotating shaft assembly 10 is subjected to external force, and when the rotating part 41 is in contact with the first portion 2 or the second portion 3, a force-bearing surface of the rotating part 41 relative to the first portion 2 and a force-bearing surface of the rotating part 41 relative to the second portion 3 are located at different positions, and therefore, force borne by the rotating part 41, force borne by the first portion 2, and force borne by the second portion 3 are relatively scattered, so that force borne by the rotating part 41 on the first surface 411 and the second surface 412 is relatively small, and force borne by a side surface that is of the first portion 2 and that is opposite to the first surface 411 and force borne by a side surface that is of the second portion 3 and that is opposite to the second surface 412 are also relatively small. Specifically, on the first surface 411, because the second portion 3 is not subjected to force in this region, rigidity required for the second portion 3 on the first surface 411 is relatively small, and a thickness of the second portion 3 may be correspondingly reduced; and on the second surface 412, because the first portion 2 is not subjected to force in this region, required rigidity on the second surface 412 is relatively small, and a thickness of the first portion 2 may also be correspondingly reduced. Therefore, rigidity of the rotating shaft assembly 10 does not need to be increased by increasing a thickness of the swing arm 4, the thickness of the first portion 2, and the thickness of the second portion 3, so that a thickness and a volume of the rotating shaft assembly 10 can be reduced, and a space occupancy rate of the rotating shaft assembly 10 in the terminal device can be reduced. In addition, because the rotating shaft assembly 10 has a relatively small thickness and volume, when the rotating shaft assembly 10 is used in a terminal device such as a mobile phone with a foldable screen, space occupied by the rotating shaft assembly 10 is relatively small, and this facilitates miniaturization and lightening of the terminal device.

A quantity and an area of the first surface 411 may be set based on an actual requirement, and a quantity and an area of the second surface 412 may also be set based on an actual requirement. This is not limited in this application.

In some embodiments, the rotating shaft assembly 10 further includes a shaft cover 20, and the shaft cover 20 is connected to the base 1. As shown in FIG. 2, the shaft cover 20 has accommodating space, and partial structures of the first portion 2 and the second portion 3 are disposed in the shaft cover 20. When the rotating shaft assembly 10 is mounted on the terminal device, the shaft cover 20 may be used as a partial structure of a housing 30 of the terminal device, or the shaft cover 20 is configured to be connected to the housing 30 of the terminal device. The shaft cover 20 may be connected only to the first portion 2 or the second portion 3 of the base 1, or the shaft cover 20 may be connected to both the first portion 2 and the second portion 3.

Optionally, the base 1 and the shaft cover 20 may be connected by being locked by a fastener, and the fastener includes but is not limited to a screw, a bolt, a nut, and the like. Optionally, the base 1 and the shaft cover 20 may be connected through welding or bonding.

In some embodiments, there are at least two swing arms 4, the at least two swing arms 4 include a first swing arm and a second swing arm, and a swinging part of the first swing arm and a swinging part of the second swing arm are disposed on two sides of the base 1.

In this embodiment of this application, a structure of the first swing arm is the same as a structure of the second swing arm, the structure of the first swing arm and the structure of the second swing arm are the same as a structure of the swing arm 4, and the swinging part of the first swing arm and the swinging part of the second swing arm are respectively disposed on two sides of the base 1 in the width direction X. A quantity of first swing arms may be equal to a quantity of second swing arms, or the quantity of first swing arms may not be equal to the quantity of second swing arms. This is not limited in this application. The swinging part of the first swing arm and the swinging part of the second swing arm are disposed on the two sides of the base 1, so that when the rotating shaft assembly 10 is used in the terminal device, the first swing arm and the second swing arm may drive middle frames, in a terminal apparatus, on two sides of the rotating shaft assembly 10 to rotate synchronously.

Optionally, the swinging part of the first swing arm and the swinging part of the second swing arm are symmetrically disposed on the two sides of the base 1. The quantity of first swing arms and the quantity of second swing arms may be equal, and each first swing arm is disposed in a correspondence with one second swing arm. Swinging parts of a first swing arm and a second swing arm that are disposed in a correspondence are symmetrically disposed on the two sides of the base 1 in the width direction X, so that when the rotating shaft assembly 10 is subjected to external force, a force-bearing situation of the swinging part of the first swing arm is similar to a force-bearing situation of the swinging part 42 of the second swing arm, and the swinging part of the first swing arm and the swinging part of the second swing arm rotate synchronously.

For ease of description, the rotating shaft assembly 10 provided in this embodiment of this application is described below by using an example in which the rotating shaft assembly 10 includes two swing arms 4, that is, the rotating shaft assembly 10 includes one first swing arm and one second swing arm, and swinging parts 42 of the two swing arms 4 are respectively disposed on the two sides of the base 1.

In some embodiments, at least a partial structure of the rotating part 41 is disposed in the first sliding groove 21, to be slidably connected to the first sliding groove 21.

Optionally, the rotating part 41 and the swinging part 42 are an integral structure. As shown in FIG. 2 and FIG. 10, when rotating parts 41 of the two swing arms 4 are disposed in the first sliding groove 21, the two swinging parts 42 are located on two sides that are of the two rotating parts 41 and that are away from each other. In a process in which the rotating part 41 slides relative to the first portion 2 and the second portion 3, the swinging part 42 rotates relative to the first portion 2 and the second portion 3.

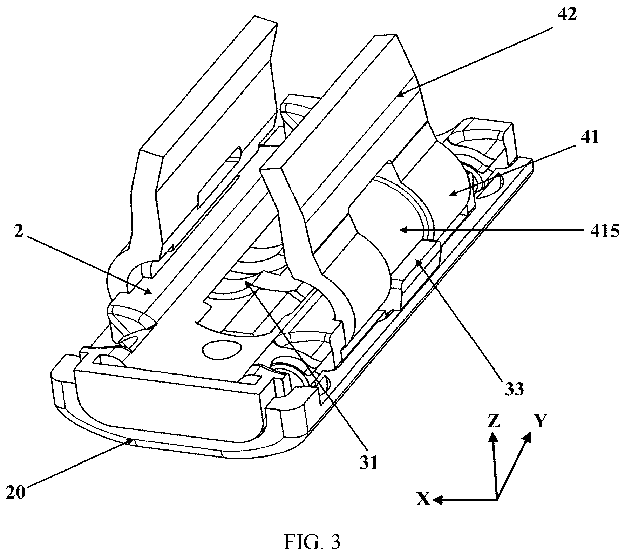

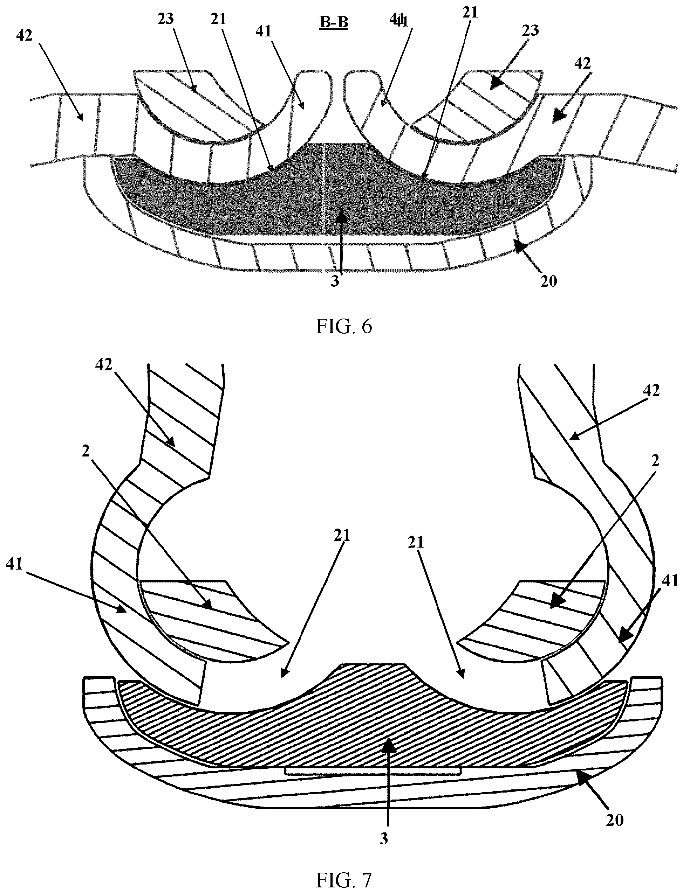

In this embodiment of this application, the rotating shaft assembly 10 includes an unfolded state and a closed state. As shown in FIG. 2, FIG. 3, FIG. 6, and FIG. 7, FIG. 6 is a cross-sectional view of the rotating shaft assembly 10 in the unfolded state in a direction B-B in FIG. 2, and FIG. 7 is a cross-sectional view of the rotating shaft assembly 10 in the closed state in B-B in FIG. 2. As shown in FIG. 2 and FIG. 7, when the rotating shaft assembly 10 is in the unfolded state, the two swinging parts 42 are away from each other and are approximately placed horizontally. As shown in FIG. 3 and FIG. 6, when the rotating shaft assembly 10 is in the closed state, the two swinging parts 42 are close to each other and are approximately placed vertically. In a process in which the rotating shaft assembly 10 is switched from the unfolded state to the closed state, both the two rotating parts 41 slide relative to the first portion 2 and the second portion 3, sides that are of the two rotating parts 41 and that are away from the swinging parts 42 move in directions away from each other, and sides that are of the two swinging parts 42 and that are away from the rotating parts 41 rotate in directions approaching each other. In a process in which the rotating shaft assembly 10 is switched from the closed state to the unfolded state, both the two rotating parts 41 slide relative to the first portion 2 and the second portion 3, sides that are of the two rotating parts 41 and that are away from the swinging parts 42 move in directions approaching each other, and sides that are of the two swinging parts 42 and that are away from the rotating part 41 rotate in directions away from each other.

Optionally, a rotation range of each swinging part 42 from the unfolded state to the closed state may be 85 degrees to 95 degrees. In an example, the rotation range of each swinging part 42 from the unfolded state to the closed state may be 90 degrees.

In some embodiments, the rotating part 41 has two first surfaces 411, and along the vertical rotation axis L that is perpendicular to the swinging part 42, an orthographic projection of at least one second surface 412 is located between orthographic projections of the two first surfaces 411.

In this embodiment of this application, as shown in FIG. 5, each rotating part 41 has two first surfaces 411 with the first portion 2. When the swing arm 4 is subjected to upward pulling force, the rotating part 41 exerts upward pressure on the first portion 2 separately by using the two first surfaces 411, so that pressure exerted by the rotating part 41 on the first portion 2 can be further distributed, thereby further helping reduce a thickness of the swing arm 4 and a thickness of the first portion 2. In addition, in the thickness direction Z of the rotating shaft assembly 10, the orthographic projections of the two first surfaces 411 are located on two sides of the orthographic projection of the at least one second surface 412, so that force-bearing surfaces of the rotating parts 41 relative to the second portion 3 are located between force-bearing surfaces of the rotating parts 41 relative to the first portion 2 in the rotation axis L of the swinging part 42, and therefore, force bearing of the rotating parts 41 is more uniform.

Optionally, as shown in FIG. 5, the two first surfaces 411 are symmetrically distributed on two sides of the second surface 412.

Optionally, as shown in FIG. 2 and FIG. 5, in the length direction Y of the rotating shaft assembly 10, the two first surfaces 411 are respectively disposed near two side edges of the rotating part 41, and the two first surfaces 411 respectively include the two side edges of the rotating part 41, so that in a process in which the rotating part 41 slides in the first sliding groove 21, the first portion 2 can limit the two side edges of the rotating part 41 that are prone to shaking, thereby increasing stability in a sliding process of the rotating part 41.

In some embodiments, the first portion 2 includes a first body part 22 and two connecting parts 23 on two sides of the first body part 22. The two connecting parts 23 include two pressing blocks 231. Each first surface 411 is disposed opposite to a third surface 2311 of one pressing block 231, and the third surface 2311 is a side surface that is of the pressing block 231 and that faces the second portion 3.

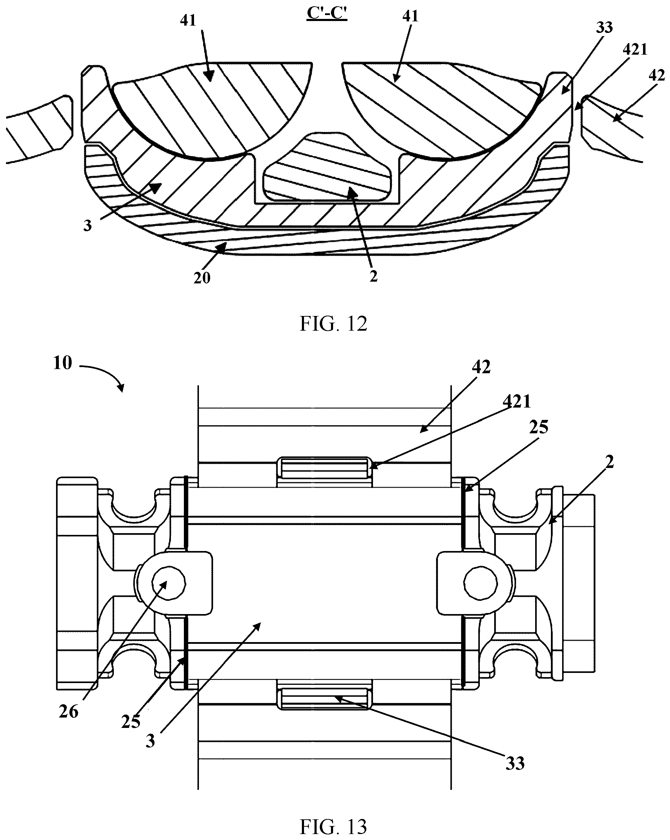

In this embodiment of this application, as shown in FIG. 10, FIG. 11, and FIG. 12, FIG. 10 is a diagram of a structure of a rotating shaft assembly 10 according to an embodiment of this application, FIG. 11 is a cross-sectional view of the rotating shaft assembly 10 in FIG. 10 in a direction A'-A', and FIG. 12 is a cross-sectional view of the rotating shaft assembly 10 in FIG. 10 in a direction C'-C'. The first portion 2 includes two connecting parts 23 and a first body part 22 located between the two connecting parts 23. The first body part 22 may be a middle portion of the first portion 2, as shown in FIG. 14. Each connecting part 23 includes two pressing blocks 231. As shown in FIG. 14, FIG. 15, FIG. 16, and FIG. 18, third surfaces 2311 of the two pressing blocks 231 are respectively disposed opposite to two first surfaces 411 of the rotating part 41. Correspondingly, the first portion 2 includes two fourth surfaces 24, and the fourth surface 24 of the first portion 2 forms a third surface 2311 of the pressing block 231.

When the swing arm 4 is subjected to upward pulling force, the first portion 2 exerts downward pressure on the rotating part 41 by using the two pressing blocks 231, and the two first surfaces 411 can disperse pressure exerted by the first portion 2 on the rotating part 41 and force exerted by the rotating part 41 on the first portion 2, thereby further helping reduce the thickness of the swing arm 4 and the thickness of the first portion 2.

In this embodiment of this application, a first sliding sub-groove is formed between each pressing block 231 and the second portion 3, two first sliding sub-grooves formed by the two pressing blocks 231 and the second portion 3 form the first sliding groove 21, and openings of the two first sliding sub-grooves are opposite to each other. In the length direction Y of the rotating shaft assembly 10, two sides of the rotating part 41 are respectively disposed in the two first sliding sub-grooves, and are slidably connected to the two first sliding sub-grooves.

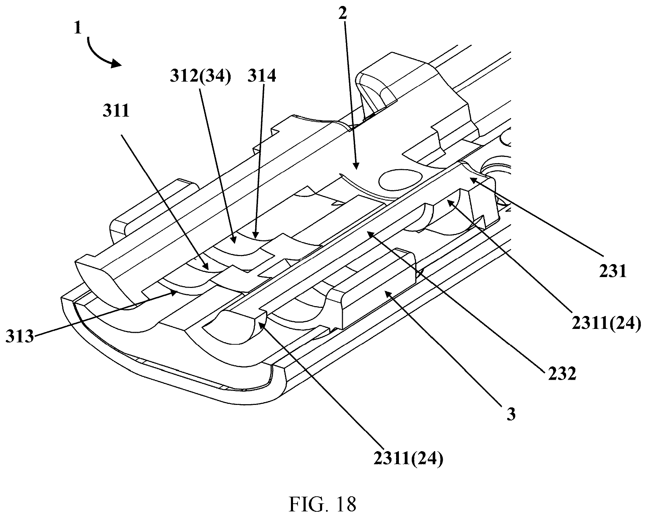

In some embodiments, as shown in FIG. 14 and FIG. 18, each connecting part 23 further includes a connecting member 232, and the connecting member 232 is connected to the two pressing blocks 231.

In this embodiment of this application, the connecting member 232 is used to increase rigidity of the first portion 2, and the connecting member 232 is further configured to further limit the swing arm 4 in a vertical direction, to reduce a probability that the swing arm 4 is detached from the first sliding groove 21 in a rotating process. Optionally, the connecting member 232 may be a beam.

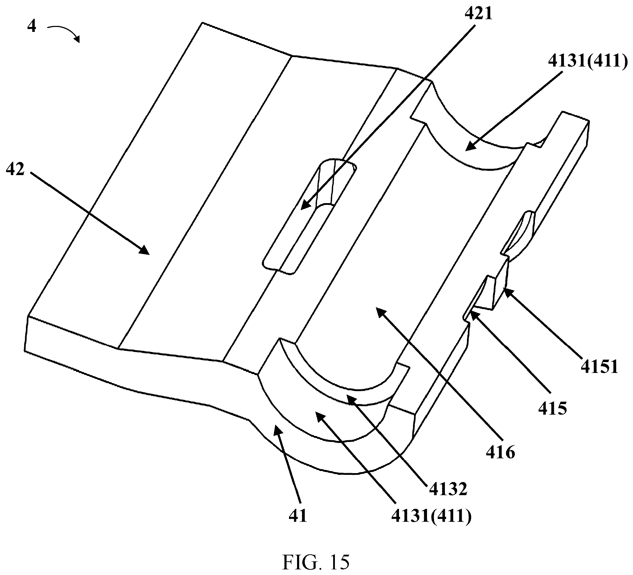

In some embodiments, the connecting member 232 is in a strip shape. As shown in FIG. 15, a first strip groove 416 is disposed on a side surface that is of the rotating part 41 and that is away from the shaft cover 20, the first strip groove 416 extends in a length direction of the connecting member 232, and at least a partial structure of the connecting member 232 is disposed in the first strip groove 416. The first strip groove 416 is configured to accommodate the connecting member 232, so that at least a partial structure of the connecting member 232 is embedded in the rotating part 41. After the connecting member 232 cooperates with the rotating part 41, an overall thickness of the rotating part 41 and the connecting member 232 is reduced, a thickness and a volume of the rotating shaft assembly 10 are further reduced, and a space occupancy rate of the rotating shaft assembly 10 in the terminal device is reduced. Optionally, all structures of the connecting member 232 are disposed in the first strip groove 416. Optionally, the connecting member 232 is in a strip shape.

Optionally, each connecting member 232 and two pressing blocks 231 located at two ends of the connecting member 232 are an integral structure, and the two connecting parts 23 and the first body part 22 are an integral structure.

In this embodiment of this application, the connecting member 232 may be disposed between the two pressing blocks 231, or the connecting member 232 may not be disposed between the two pressing blocks 231. This is not limited in this application. Specifically, the connecting member 232 is not disposed in the connecting part 23, the first strip groove 416 for accommodating the connecting member 232 does not need to be disposed on the rotating part 41 of the swing arm 4, and there is no need to provide accommodating space for the connecting member 232 by reducing a thickness of the rotating part 41. As shown in FIG. 10, FIG. 12, and FIG. 17, while it is ensured that the first portion 2 has relatively good rigidity and an overall thickness of the rotating assembly 10 is not increased, the rotating part 41 has a relatively large thickness, thereby dramatically increasing rigidity of the rotating part 41. As shown in FIG. 14 and FIG. 18, the connecting member 232 is disposed on the connecting part 23. The connecting member 232 can increase rigidity of the first portion 2. The connecting member 232 can further limit the swing arm 4 in the vertical direction, thereby reducing a probability that the swing arm 4 is detached from the first sliding groove 21 in a rotating process.

Optionally, as shown in FIG. 2, a second through hole 221 is disposed on the first body part 22, the second through hole 221 forms a hollow part on a middle portion of the first body part 22, and two ends that are of the two rotating parts 41 and that are close to each other may penetrate the second through hole 221. The second through hole 221 may reduce obstruction of the first body part 22 for the two rotating parts 41, and increase sliding ranges of the two rotating parts 41, thereby increasing a rotating range of the swinging part 42.

In some embodiments, a first concave part 413 is disposed on a side surface that is of the rotating part 41 and that is away from the shaft cover 20, at least a partial structure of the pressing block 231 is disposed in the first concave part 413, and a bottom wall of the first concave part 413 includes the first surface 411.

In this embodiment of this application, as shown in FIG. 2 and FIG. 15, the rotating part 41 includes two first concave parts 413 and two first pressing blocks 231, and a partial or entire structure of each first pressing block 231 is disposed in one first concave part 413. As shown in FIG. 2, FIG. 14, and FIG. 15, the first concave part 413 includes a first sidewall 4131 and a first bottom wall 4132, the first bottom wall 4132 is arc-shaped, and the first bottom wall 4132 includes the first surface 411. In some embodiments, the first surface 411 includes the first bottom wall 4132. When at least a partial structure of each pressing block 231 is disposed in one first concave part 413, a third surface 2311 of the pressing block 231 is disposed opposite to the first bottom wall 4132 of the first concave part 413.

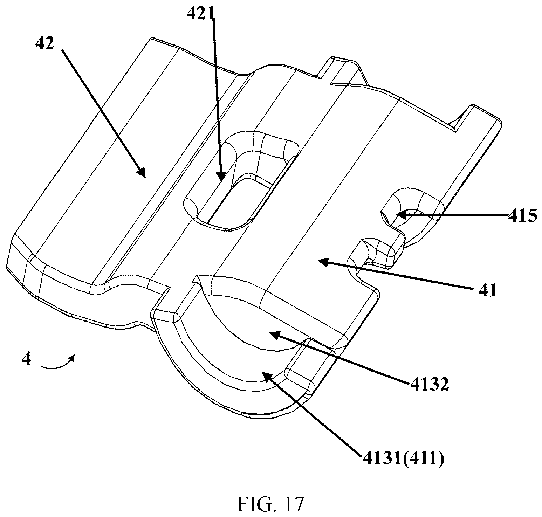

Optionally, as shown in FIG. 17, a second convex part is formed between two first concave parts 413. An upper surface of the rotating part 41, that is, a side surface that is of the rotating part 41 and that is opposite to the first portion 2, includes two first bottom walls 4132 and an upper surface of the second convex part together, and due to the two first concave parts 413, the upper surface of the rotating part 41 is in a stepped shape.

In this embodiment of this application, at least a partial structure of the pressing block 231 is disposed in the first concave part 413. The first sidewall 4131 of the first concave part 413 can limit the pressing block 231, to reduce a probability of displacement of the rotating part 41 in a direction parallel to the rotation axis L of the swinging part 42 in a process in which the rotating part 41 slides relative to the first sliding groove 21, and further increase stability of a connection between the rotating part 41 and the first portion 2 and a connection between the rotating part 41 and the second portion 3. Optionally, two sides that are of the two first concave parts 413 and that are away from each other extend to an edge of the rotating part 41, that is, the two sides that are of the two first concave parts 413 and that are away from each other do not have a sidewall, so that the rotating part 41 is slidably connected to the first sliding groove 21 by using the two first concave parts 413.

Optionally, as shown in FIG. 2 and FIG. 5, when the connecting part 23 includes the connecting member 232, there is a gap between an upper surface of the second convex part 414 and a lower surface of the connecting member 232, that is, a lower surface of the second convex part 414 is not in contact with an upper surface of the connecting member 232, so that the upper surface of the second convex part 414 and the lower surface of the connecting member 232 do not need to have relatively high flatness, thereby reducing process difficulty of the rotating part 41 and the connecting part 23, and reducing process difficulty of the swing arm 4 and the first portion 2.

In some embodiments, a second concave part 415 is disposed on a side surface that is of the rotating part 41 and that faces the shaft cover 20, a first convex part 31 is disposed on the second portion 3, the first convex part 31 is disposed in the second concave part 415, and a bottom wall of the second concave part 415 includes the second surface 412.

In this embodiment of this application, as shown in FIG. 15, FIG. 16, and FIG. 18, the second concave part 415 includes a second sidewall 41521, a third sidewall 41522, and a second bottom wall 4153 connected to the second sidewall 41521 and the third sidewall 41522, and the second bottom wall 4153 is arc-shaped. The first convex part 31 includes a first top wall 312 and a fourth sidewall 313 and a fifth sidewall 314 on two sides of the first top wall 312. The first top wall 312 is a fifth surface 34 of the second portion 3.

When the rotating part 41 is slidably connected to the first sliding groove 21, the second bottom wall 4153 is disposed opposite to the first top wall 312, the second sidewall 41521 is disposed opposite to the fourth sidewall 313, and the third sidewall 41522 is disposed opposite to the fifth sidewall 314. The second bottom wall 4153 of the second concave part 415 includes a second surface 412. Optionally, the second surface 412 includes the second bottom wall 4153. The second bottom wall 4153 of the two second concave parts 415 is used as the second surface 412 of the rotating part 41, and when the swing arm 4 is subjected to downward extrusion force, the second portion 3 exerts upward support force on the rotating part 41 by using the two first convex parts 31, so that support force exerted by the second portion 3 on the rotating part 41 can be dispersed, thereby helping further reduce the thickness of the swing arm 4 and the thickness of the second portion 3. In addition, the second sidewall 41521 and the third sidewall 41522 of the second concave part 415 can limit the first convex part 31, to limit the rotating part 41, thereby reducing a probability of displacement of the rotating part 41 in a direction parallel to the rotation axis L of the swinging part 42 in a process in which the rotating part 41 slides relative to the first sliding groove 21, and further increasing stability of a connection between the rotating part 41 and the first portion 2 and a connection between the rotating part 41 and the second portion 3.

Optionally, there is a gap between the second sidewall 41521 of the second concave part 415 and the fourth sidewall 313 of the first convex part 31, and there is also a gap between the third sidewall 41522 of the second concave part 415 and the fifth sidewall 314 of the first convex part 31; in other words, the second sidewall 41521 is not in contact with the fourth sidewall 313, and the third sidewall 41522 is not in contact with the fifth sidewall 314, so that the sidewall of the second concave part 415 and the sidewall of the first convex part 31 do not need to have relatively high flatness, and process difficulty of the swing arm 4 and the second portion 3 is reduced.

In some embodiments, as shown in FIG. 2, FIG. 15, FIG. 16, and FIG. 17, a limiting block 4151 is disposed on the bottom wall of the second concave part 415, and the limiting block 4151 is located on a side that is of the rotating part 41 and that is away from the swinging part 42. A third concave part 311 is disposed on a side surface that is of the first convex part 31 and that faces the second concave part 415, and the first limiting block 4151 is disposed in the third concave part 311.

In this embodiment of this application, one first limiting block 4151 is disposed on each rotating part 41, the first limiting block 4151 is disposed in the third concave part 311, and a sidewall that is of the third concave part 311 and that is close to the swinging part 42 may limit the first limiting block 4151. Specifically, when two swing arms 4 are switched from the unfolded state to the closed state, that is, when the rotating shaft assembly 10 is switched from the unfolded state to the closed state, a side that is of the rotating part 41 in the swing arm 4 and that is away from the swinging part 42, that is, a front side of the rotating part 41, slides from a middle portion of the second portion 3 to an edge portion of the second portion 3, and a sidewall 3111 that is of the third concave part 311 and that is close to the swinging part 42 can block the first limiting block 4151, so that the front side of the rotating part 41 does not continue to slide after sliding to the edge portion of the second portion 3. Based on this, the sidewall that is of the third concave part 311 and that is close to the swinging part 42 can limit the first limiting block 4151, to limit a sliding range of the first limiting block 4151, thereby limiting a sliding range of the rotating part 41, and reducing a probability that the rotating part 41 is detached from the second portion 3 in a sliding process.

In some implementations, a first through hole 421 is disposed on the swinging part 42. When at least two swing arms 4 are in the unfolded state, an end part 33 of the second portion 3 extends into the first through hole 421 in the thickness direction Z of the rotating shaft assembly 10.

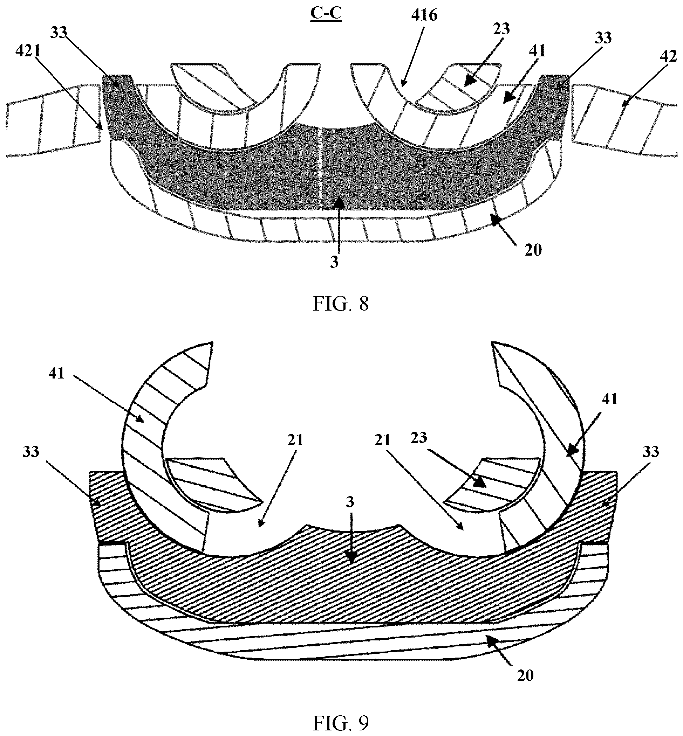

In this embodiment of this application, as shown in FIG. 9, when the rotating shaft assembly 10 is in the closed state, end parts 33 on two sides of the second portion 3 in the width direction Y can limit the rotating part 41, to provide a larger sliding range for the rotating part 41, and reduce a probability that the two rotating parts 41 are detached from the second portion 3 when sliding relative to the second portion 3. In addition, as shown in FIG. 4 and FIG. 8, when the two swing arms 4 are in the unfolded state, that is, when the rotating shaft assembly 10 is in the unfolded state, end parts 33 on two sides of the second portion 3 in the width direction X extend into the first through hole 421, and the first through hole 421 is used to accommodate the end part 33 of the second portion 3, to reduce impact exerted by the end part 33 of the second portion 3 on the swinging part 42 in a rotating process of the swing arm 4.

In addition, in this embodiment of this application, because the second portion 3 bears no force on the first surface 411, and stiffness required for the second portion 3 on the first surface 411 is relatively small, a thickness of the second portion 3 is correspondingly reduced. Therefore, a thickness of the end part 33 of the second portion 3 is also relatively small, so that a horizontal width occupied by the end part 33 of the second portion 3 can be reduced, and the volume of the rotating shaft assembly 10 can be further reduced.

In some embodiments, the at least one first surface 411 and the at least one second surface 412 are both circular arc surfaces, and the at least one first surface 411 coincides with a center axis of the at least one second surface 412.

In this embodiment of this application, the first surface 411 and the second surface 412 are circular arc surfaces, and the first sliding groove 21 is also a circular arc groove, and the circular arc surface and the circular arc groove have no edges or angles, and this helps improve fluency when the rotating part 41 slides relative to the first portion 2 and the second portion 3. In addition, the first surface 411 coincides with the center axis of the second surface 412, so that a distance between the first surface 411 and the second surface 412 in the thickness direction remains unchanged in the sliding process of the rotating part 41, and stability in a process in which the rotating part 41 slides relative to the first portion 2 and the second portion 3 is improved.

In some embodiments, a thickness of the rotating part 41 varies in a radial direction.

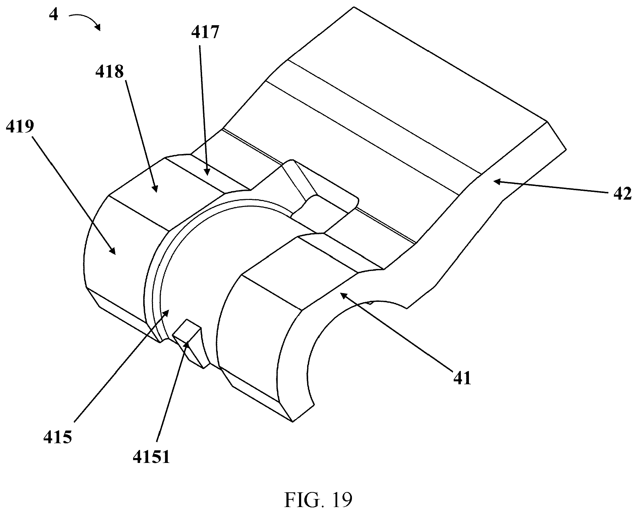

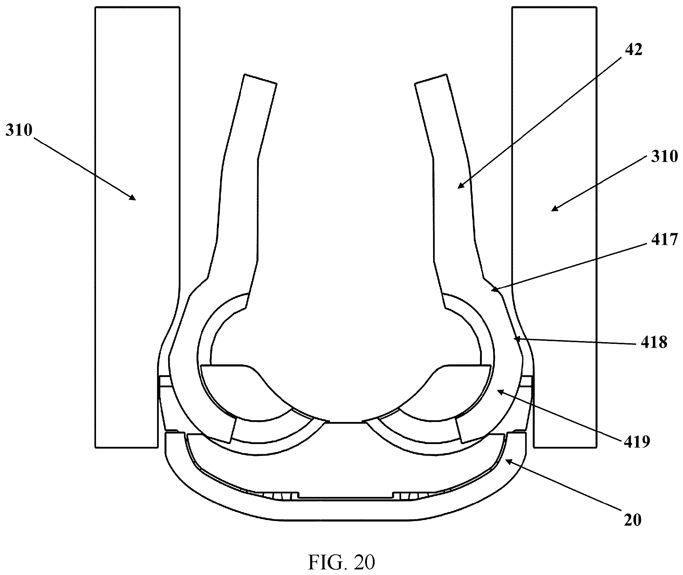

In this embodiment of this application, the first surface 411 and the second surface 412 are arc surfaces or circular arc surfaces, and a radial direction of the rotating part 41 is an extension direction of a radius corresponding to the first surface 411 and an extension direction of a radius corresponding to the second surface 412. For example, the radial direction is the extension direction of the radius corresponding to the first surface 411. Each point on the first surface 411 has a corresponding extension direction of a radius, and extension directions of radii corresponding to all points intersect with a center axis corresponding to the first surface 411. As shown in FIG. 19 and FIG. 20, from a side that is of the rotating part 41 and that is close to the swinging part 42 to a side that is of the rotating part 41 and that is away from the swinging part 42, the rotating part 41 successively includes a first segment 417, a second segment 418, and a third segment 419. A radial thickness of the first segment 417 is not equal to a radial thickness of the second segment 418, and a radial thickness of the third segment 419 is not equal to the radial thickness of the second segment 418. Optionally, the radial thickness of the second segment 418 is less than the radial thickness of the first segment 417 and the radial thickness of the third segment 419. When the rotating shaft assembly 10 is in the closed state, the second segment 418 may provide avoidance space for other structural components in the terminal device because the radial thickness of the second segment 418 is less than the radial thickness of the first segment 417 and the radial thickness of the third segment 419. For example, as shown in FIG. 20, the second segment 418 may provide avoidance space for a middle frame 310 of the housing 30 of the terminal device, so that the middle frame 310 has more design space.

Optionally, a partial structure of a side that is of the second segment 418 and that is away from the first portion 2 may be removed, so that the radial thickness of the second segment 418 is less than the radial thickness of the first segment 417 and the radial thickness of the third segment 419.

In some embodiments, the first portion 2 and the second portion 3 are connected as an integral structure. The first portion 2 and the second portion 3 may be an integral structure. This facilitates mounting of components in the rotating shaft structure 10 and reduces structural complexity of the rotating shaft structure 10.

Optionally, a manner of connecting the first portion 2 and the second portion 3 includes at least one of a welding connection, a bonding connection, a screw connection, and a nut connection.

In this embodiment of this application, as shown in FIG. 12, FIG. 12 is a front view of the rotating shaft assembly 10 in FIG. 2. There is a connection region 25 on the first portion 2 and the third portion 3, and the first portion 2 and the second portion 3 are fastened through welding or glue dispensing in the connection region 25. In addition, a positioning hole 26 is disposed on the first portion 2 and the second portion 3. In a process of connecting the first portion 2 and the second portion 3, a fastener such as a bolt may penetrate the positioning hole 26 first to fixedly connect the first portion 2 and the second portion 3, and then, the first portion 2 and the second portion 3 are connected in the connection region 25 through glue dispensing or welding, and finally, the fastener is removed, and welding precision and bonding precision between the first portion 2 and the second portion 3 are increased by using the positioning hole 26 and the fastener.

Optionally, the first portion 2 and the second portion 3 may be alternatively connected by using a fastener such as a bolt.

An embodiment of a second aspect of this application provides a terminal device. As shown in FIG. 1, the terminal device includes a housing 30, a flexible display screen 40, and the rotating shaft assembly 10 described in any one of the foregoing embodiments. The flexible display screen 40 is connected to the housing 30, the flexible display screen 40 includes a bending region 401, the rotating shaft assembly 10 is located on a non-display side of the flexible display screen 40, and the rotating shaft assembly 10 is disposed in a correspondence with the bending region 401.

In this embodiment of this application, the terminal device may be a terminal device with a foldable screen effect, such as a mobile phone, a tablet computer, a notebook computer, or a watch. The terminal device with the foldable screen effect implements a closed state and an unfolded state by using the rotating shaft assembly 10. When the terminal device is in the unfolded state, two swinging parts 42 of two swing arms 4 in the rotating shaft assembly 10 are horizontally placed, to maintain flatness of a surface of the flexible display screen 40. When the terminal device is in a folded state, the swinging parts 42 of the two swing arms 4 in the rotating shaft assembly 10 are vertically placed, so that the flexible display screen 40 is in a bent state. The folding terminal device includes but is not limited to a mobile phone, a tablet computer, an electronic paper, and the like.

In some embodiments, the terminal device is a terminal device with a foldable screen.

In the rotating shaft assembly 10 included in the terminal device provided in this embodiment of this application, because at least a portion of a first surface 411 and at least a portion of a second surface 412 are staggered in a direction of a rotation axis L of the swinging part 42, that is, at least one first surface 411 and at least one second surface 412 are located at different positions of a rotating part 41, the rotating shaft assembly 10 is subjected to external force, and when the rotating part 41 is in contact with a first portion 2 or a second portion 3, a force-bearing surface of the rotating part 41 relative to the first portion 2 and a force-bearing surface of the rotating part 41 relative to the second portion 3 are located at different positions, and therefore, force borne by the rotating part 41, force borne by the first portion 2, and force borne by the second portion 3 are relatively scattered, so that force borne by the rotating part 41 on the first surface 411 and the second surface 412 is relatively small, and force borne by a side surface that is of the first portion 2 and that is opposite to the first surface 411 and force borne by a side surface that is of the second portion 3 and that is opposite to the second surface 412 are relatively small. Specifically, on the first surface 411, because the second portion 3 is not subjected to force in this region, rigidity required for the second portion 3 on the first surface 411 is relatively small, and a thickness of the second portion 3 may be correspondingly reduced; and on the second surface 412, because the first portion 2 is not subjected to force in this region, required rigidity on the second surface 412 is relatively small, and a thickness of the first portion 2 may also be correspondingly reduced. Therefore, rigidity of the rotating shaft assembly 10 does not need to be increased by increasing a thickness of the swing arm 4, the thickness of the first portion 2, and the thickness of the second portion 3, so that a thickness and a volume of the rotating shaft assembly 10 can be reduced, and a space occupancy rate of the rotating shaft assembly 10 in the terminal device can be reduced.

## Claims

1. A rotating shaft assembly (10), comprising:
a base (1), wherein the base (1) comprises a first portion (2) and a second portion (3) that are fixedly connected, and a first sliding groove (21) is formed between the first portion (2) and the second portion (3); and
a swing arm (4), wherein the swing arm (4) comprises a rotating part (41) and a swinging part (42), the rotating part (41) is slidably connected to the first sliding groove (21), and when the rotating part (41) slides relative to the first sliding groove (21), the swinging part (42) rotates relative to the base (1); wherein
the rotating part (41) comprises at least one first surface (411) and at least one second surface (412), the at least one first surface (411) is disposed opposite to a side surface of the first portion (2), the at least one second surface (412) is disposed opposite to a side surface of the second portion (3);
**characterized in that**
along a rotation axis (L) of the swinging part (42), at least a portion of the first surface (411) and at least a portion of the second surface (412) are staggered, such that this respective portion of the first surface (411) and this respective portion of the second surface (412) do not overlap entirely along the rotation axis (L) of the swinging part (42).

2. The rotating shaft assembly (10) according to claim 1, wherein there are at least two swing arms (4), the at least two swing arms (4) comprise a first swing arm and a second swing arm, and a swinging part (42) of the first swing arm and a swinging part (42) of the second swing arm are disposed on two sides of the base (1).

3. The rotating shaft assembly (10) according to claim 1 or 2, wherein the rotating shaft assembly (10) further comprises a shaft cover (20), and the shaft cover (20) is connected to the base (1).

4. The rotating shaft assembly (10) according to claim 3, wherein the rotating part (41) comprises two first surfaces (411), and the at least one second surface (412) is located between the two first surfaces (411) along the rotation axis (L) of the swinging part (42).

5. The rotating shaft assembly (10) according to claim 4, wherein the first portion (2) comprises a first body part (22) and two connecting parts located on two sides of the first body part (22), each connecting part comprises two pressing blocks (231), each first surface (411) is disposed opposite to a third surface (2311) of one pressing block (231), and the third surface (2311) is a side surface that is of the pressing block and that faces the second portion (3).

6. The rotating shaft assembly (10) according to claim 5, wherein the connecting part further comprises a connecting member (232), and the connecting member (232) is connected to the two pressing blocks (231).

7. The rotating shaft assembly (10) according to claim 6, wherein the connecting member (232) is in a strip shape, a first strip groove (416) is disposed on a side surface that is of the rotating part (41) and that is away from the shaft cover (20), the first strip groove (416) extends in a length direction of the connecting member (232), and at least a partial structure of the connecting member (232) is disposed in the first strip groove (416).

8. The rotating shaft assembly (10) according to any one of claims 5 to 7, wherein a first concave part (413) is disposed on a side surface that is of the rotating part (41) and that is away from the rotation axis (L) of the swinging part (42), at least a partial structure of the pressing block (231) is disposed in the first concave part (413), and a bottom wall of the first concave part (413) comprises the first surface (411).

9. The rotating shaft assembly (10) according to any one of claims 1 to 7, wherein a second concave part (415) is disposed on a side surface that is of the rotating part (41) and that faces the rotation axis (L) of the swinging part (42), a first convex part (31) is disposed on the second portion (3), at least a partial structure of the first convex part (31) extends into the second concave part (415), and a bottom wall of the second concave part (415) comprises the second surface (412).

10. The rotating shaft assembly (10) according to claim 9, wherein a first limiting block (4151) is disposed on the bottom wall of the second concave part (415), and the first limiting block (4151) is located on a side that is of the rotating part (41) and that is away from the swinging part (42); and
a third concave part (311) is disposed on a side surface that is of the first convex part (31) and that faces the second concave part (415), and at least a partial structure of the first limiting block (4151) is disposed in the third concave part (311).

11. The rotating shaft assembly (10) according to claim 2, wherein a first through hole (421) is disposed on the swinging part (42), and when at least two swing arms (4) are in an unfolded state, an end part (33) of the second portion (3) extends into the first through hole (421) in a thickness direction of the rotating shaft assembly (10).

12. The rotating shaft assembly (10) according to claim 2, wherein a swinging part (42) of the first swing arm and a swinging part (42) of the second swing arm are symmetrically disposed on two sides of the base (1).

13. The rotating shaft assembly (10) according to any one of claims 1 to 12, wherein both the first surface (411) and the second surface (412) are arc-shaped surfaces.

14. A terminal device, wherein the terminal device comprises a housing (30), a flexible display screen (40), and the rotating shaft assembly (10) according to any one of claims 1 to 13, wherein the flexible display screen (40) is connected to the housing (30), the flexible display screen (40) comprises a bending region (401), the rotating shaft assembly (10) is located on a non-display side of the flexible display screen (40), and the rotating shaft assembly (10) is disposed in a correspondence with the bending region (401).

15. The terminal device according to claim 14, wherein the terminal device is a terminal device with a foldable screen.

## Patentansprüche

1. Eine rotierende Wellenbaugruppe (10), umfassend:
eine Basis (1), wobei die Basis (1) einen ersten Abschnitt (2) und einen zweiten Abschnitt (3) umfasst, die fest miteinander verbunden sind, und eine erste Führungsnut (21) zwischen dem ersten Abschnitt (2) und dem zweiten Abschnitt (3) ausgebildet ist; und
einen Schwenkarm (4), wobei der Schwenkarm (4) einen Drehteil (41) und einen Schwenkteil (42) umfasst, der Drehteil (41) gleitend mit der ersten Führungsnut (21) verbunden ist und, wenn der Drehteil (41) relativ zur ersten Führungsnut (21) gleitet, der Schwenkteil (42) sich relativ zur Basis (1) dreht; wobei
der Drehteil (41) mindestens eine erste Fläche (411) und mindestens eine zweite Fläche (412) umfasst, wobei sich die mindestens eine erste Fläche (411) gegenüber einer Seitenfläche des ersten Abschnitts (2) befindet und die mindestens eine zweite Fläche (412) gegenüber einer Seitenfläche des zweiten Abschnitts (3) angeordnet ist;
**dadurch gekennzeichnet**
**dass** entlang einer Rotationsachse (L) des Schwenkteils (42) mindestens ein Abschnitt der ersten Fläche (411) und mindestens ein Abschnitt der zweiten Fläche (412) versetzt angeordnet sind, sodass dieser jeweilige Abschnitt der ersten Fläche (411) und dieser jeweilige Abschnitt der zweiten Fläche (412) sich entlang der Rotationsachse (L) des Schwenkteils (42) nicht vollständig überlappen.

2. Die rotierende Wellenbaugruppe (10) nach Anspruch 1, wobei mindestens zwei Schwenkarme (4) vorhanden sind, die mindestens zwei Schwenkarme (4) einen ersten Schwenkarm und einen zweiten Schwenkarm umfassen, und ein Schwenkteil (42) des ersten Schwenkarms und ein Schwenkteil (42) des zweiten Schwenkarms auf zwei Seiten der Basis (1) angeordnet sind.

3. Die rotierende Wellenbaugruppe (10) nach Anspruch 1 oder 2, wobei die rotierende Wellenbaugruppe (10) ferner eine Wellabdeckung (20) umfasst und die Wellabdeckung (20) mit der Basis (1) verbunden ist.

4. Die rotierende Wellenbaugruppe (10) nach Anspruch 3, wobei der Drehteil (41) zwei erste Flächen (411) umfasst und die mindestens eine zweite Fläche (412) entlang der Rotationsachse (L) des Schwenkteils (42) zwischen den beiden ersten Flächen (411) angeordnet ist.

5. Die rotierende Wellenbaugruppe (10) nach Anspruch 4, wobei der erste Abschnitt (2) einen ersten Körperabschnitt (22) und zwei Verbindungsteile umfasst, die sich an zwei Seiten des ersten Körperabschnitts (22) befinden, jedes Verbindungsteil zwei Druckblöcke (231) umfasst, jede erste Fläche (411) einer dritten Fläche (2311) eines Druckblocks (231) gegenüberliegt und die dritte Fläche (2311) eine Seitenfläche des Druckblocks ist, die dem zweiten Abschnitt (3) zugewandt ist.

6. Die Drehwellenbaugruppe (10) gemäß Anspruch 5, wobei der Verbindungsteil ferner ein Verbindungselement (232) umfasst und das Verbindungselement (232) mit den beiden Druckblöcken (231) verbunden ist.

7. Die Drehwellenbaugruppe (10) gemäß Anspruch 6, wobei das Verbindungselement (232) eine Streifenform aufweist, eine erste Streifennut (416) an einer Seitenfläche angeordnet ist, die sich an dem Drehteil (41) befindet und vom Wellenabdeckung (20) entfernt ist, die erste Streifennut (416) sich in Längsrichtung des Verbindungselements (232) erstreckt und zumindest ein Teilbereich der Struktur des Verbindungselements (232) in der ersten Streifennut (416) angeordnet ist.

8. Die Drehwellenbaugruppe (10) gemäß einem der Ansprüche 5 bis 7, wobei ein erster konkaver Bereich (413) an einer Seitenfläche angeordnet ist, die sich an dem Drehteil (41) befindet und von der Drehachse (L) des Schwenkteils (42) entfernt ist, mindestens ein Teilbereich der Struktur des Druckblocks (231) im ersten konkaven Bereich (413) angeordnet ist und eine Bodenwand des ersten konkaven Bereichs (413) die erste Oberfläche (411) umfasst.

9. Die Drehwellenbaugruppe (10) gemäß einem der Ansprüche 1 bis 7, wobei ein zweiter konkaver Bereich (415) an einer Seitenfläche angeordnet ist, die sich an dem Drehteil (41) befindet und der Drehachse (L) des Schwenkteils (42) zugewandt ist, ein erster konvexer Bereich (31) am zweiten Abschnitt (3) angeordnet ist, mindestens ein Teilbereich der Struktur des ersten konvexen Bereichs (31) in den zweiten konkaven Bereich (415) ragt und eine Bodenwand des zweiten konkaven Bereichs (415) die zweite Oberfläche (412) umfasst.

10. Die Drehwellenbaugruppe (10) gemäß Anspruch 9, wobei ein erster Begrenzungsblock (4151) an der Bodenwand des zweiten konkaven Bereichs (415) angeordnet ist und der erste Begrenzungsblock (4151) sich an einer vom Schwenkteil (42) entfernten Seite des Drehteils (41) befindet;
Ein dritter konkaver Bereich (311) ist an einer Seitenfläche des ersten konvexen Bereichs (31) angeordnet, die dem zweiten konkaven Bereich (415) zugewandt ist, und mindestens ein Teilbereich der Struktur des ersten Begrenzungsblocks (4151) ist im dritten konkaven Bereich (311) angeordnet.

11. Die Drehwellenbaugruppe (10) gemäß Anspruch 2, wobei ein erstes Durchgangsloch (421) am Schwenkteil (42) angeordnet ist und, wenn sich mindestens zwei Schwenkarme (4) im ausgeklappten Zustand befinden, ein Endteil (33) des zweiten Abschnitts (3) in das erste Durchgangsloch (421) in Dickenrichtung der Drehwellenbaugruppe (10) ragt.

12. Die Drehwellenbaugruppe (10) gemäß Anspruch 2, wobei ein Schwenkteil (42) des ersten Schwenkarms und ein Schwenkteil (42) des zweiten Schwenkarms symmetrisch auf beiden Seiten des Sockels (1) angeordnet sind.

13. Die Drehwellenbaugruppe (10) gemäß einem der Ansprüche 1 bis 12, wobei sowohl die erste Oberfläche (411) als auch die zweite Oberfläche (412) bogenförmige Flächen sind.

14. Ein Endgerät, wobei das Endgerät ein Gehäuse (30), einen flexiblen Bildschirm (40) und die Drehwellenbaugruppe (10) gemäß einem der Ansprüche 1 bis 13 umfasst, wobei der flexible Bildschirm (40) mit dem Gehäuse (30) verbunden ist, der flexible Bildschirm (40) einen Biegebereich (401) umfasst, die Drehwellenbaugruppe (10) sich auf der Nicht-Anzeigeseite des flexiblen Bildschirms (40) befindet und die Drehwellenbaugruppe (10) entsprechend dem Biegebereich (401) angeordnet ist.

15. Das Endgerät nach Anspruch 14, wobei das Endgerät ein Endgerät mit faltbarem Bildschirm ist.

## Revendications

1. Un ensemble d'arbre rotatif (10), comprenant :
une base (1), la base (1) comprenant une première partie (2) et une seconde partie (3) qui sont fixement reliées, et une première rainure coulissante (21) est formée entre la première partie (2) et la seconde partie (3) ; et
un bras oscillant (4), le bras oscillant (4) comprenant une partie rotative (41) et une partie oscillante (42), la partie rotative (41) étant connectée de manière coulissante à la première rainure coulissante (21), et lorsque la partie rotative (41) coulisse par rapport à la première rainure coulissante (21), la partie oscillante (42) pivote par rapport à la base (1) ; dans lequel
la partie rotative (41) comprend au moins une première surface (411) et au moins une seconde surface (412), la ou les première(s) surface(s) (411) étant disposée(s) en face d'une surface latérale de la première partie (2), la ou les seconde(s) surface(s) (412) étant disposée(s) en face d'une surface latérale de la seconde partie (3) ;
**caractérisé en ce que**
le long d'un axe de rotation (L) de la partie oscillante (42), au moins une partie de la première surface (411) et au moins une partie de la seconde surface (412) sont décalées, de sorte que cette partie respective de la première surface (411) et cette partie respective de la seconde surface (412) ne se chevauchent pas entièrement le long de l'axe de rotation (L) de la partie oscillante (42).

2. L'ensemble d'arbre rotatif (10) selon la revendication 1, dans lequel il y a au moins deux bras oscillants (4), lesdits au moins deux bras oscillants (4) comprenant un premier bras oscillant et un second bras oscillant, et une partie oscillante (42) du premier bras oscillant et une partie oscillante (42) du second bras oscillant étant disposées de part et d'autre de la base (1).

3. L'ensemble d'arbre rotatif (10) selon la revendication 1 ou 2, dans lequel l'ensemble d'arbre rotatif (10) comprend en outre un couvercle d'arbre (20), et le couvercle d'arbre (20) est relié à la base (1).

4. L'ensemble d'arbre rotatif (10) selon la revendication 3, dans lequel la partie rotative (41) comprend deux premières surfaces (411), et la ou les seconde(s) surface(s) (412) est/sont située(s) entre les deux premières surfaces (411) le long de l'axe de rotation (L) de la partie oscillante (42).

5. L'ensemble d'arbre rotatif (10) selon la revendication 4, dans lequel la première partie (2) comprend une première partie de corps (22) et deux parties de connexion situées de chaque côté de la première partie de corps (22), chaque partie de connexion comprenant deux blocs de pression (231), chaque première surface (411) étant disposée en face d'une troisième surface (2311) d'un bloc de pression (231), et la troisième surface (2311) étant une surface latérale du bloc de pression faisant face à la seconde partie (3).

6. L'ensemble de l'arbre rotatif (10) selon la revendication 5, dans lequel la partie de connexion comprend en outre un élément de connexion (232), et l'élément de connexion (232) est relié aux deux blocs de pression (231).

7. L'ensemble de l'arbre rotatif (10) selon la revendication 6, dans lequel l'élément de connexion (232) présente une forme de bande, une première rainure en bande (416) est disposée sur une surface latérale de la partie rotative (41) éloignée du couvercle d'arbre (20), la première rainure en bande (416) s'étend dans le sens de la longueur de l'élément de connexion (232), et au moins une partie de la structure de l'élément de connexion (232) est disposée dans la première rainure en bande (416).

8. L'ensemble de l'arbre rotatif (10) selon l'une quelconque des revendications 5 à 7, dans lequel une première partie concave (413) est disposée sur une surface latérale de la partie rotative (41) éloignée de l'axe de rotation (L) de la partie oscillante (42), au moins une partie de la structure du bloc de pression (231) est disposée dans la première partie concave (413), et la paroi inférieure de la première partie concave (413) comprend la première surface (411).

9. L'ensemble de l'arbre rotatif (10) selon l'une quelconque des revendications 1 à 7, dans lequel une seconde partie concave (415) est disposée sur une surface latérale de la partie rotative (41) faisant face à l'axe de rotation (L) de la partie oscillante (42), une première partie convexe (31) est disposée sur la seconde portion (3), au moins une partie de la structure de la première partie convexe (31) s'étend dans la seconde partie concave (415), et la paroi inférieure de la seconde partie concave (415) comprend la seconde surface (412).

10. L'ensemble de l'arbre rotatif (10) selon la revendication 9, dans lequel un premier bloc de limitation (4151) est disposé sur la paroi inférieure de la seconde partie concave (415), et le premier bloc de limitation (4151) est situé du côté de la partie rotative (41) opposé à la partie oscillante (42) ; et
une troisième partie concave (311) est disposée sur une surface latérale de la première partie convexe (31) faisant face à la seconde partie concave (415), et au moins une partie de la structure du premier bloc de limitation (4151) est disposée dans la troisième partie concave (311).

11. L'ensemble de l'arbre rotatif (10) selon la revendication 2, dans lequel un premier trou traversant (421) est disposé sur la partie oscillante (42), et lorsque au moins deux bras oscillants (4) sont dans un état déployé, une partie d'extrémité (33) de la seconde portion (3) s'étend dans le premier trou traversant (421) dans la direction de l'épaisseur de l'ensemble de l'arbre rotatif (10).

12. L'ensemble de l'arbre rotatif (10) selon la revendication 2, dans lequel une partie oscillante (42) du premier bras oscillant et une partie oscillante (42) du second bras oscillant sont disposées symétriquement de chaque côté de la base (1).

13. L'ensemble arbre rotatif (10) selon l'une quelconque des revendications 1 à 12, dans lequel à la fois la première surface (411) et la deuxième surface (412) sont des surfaces arquées.

14. Un dispositif terminal, dans lequel le dispositif terminal comprend un boîtier (30), un écran d'affichage flexible (40), et l'ensemble arbre rotatif (10) selon l'une quelconque des revendications 1 à 13, l'écran d'affichage flexible (40) étant connecté au boîtier (30), l'écran d'affichage flexible (40) comprenant une zone de pliage (401), l'ensemble arbre rotatif (10) étant situé du côté non affichage de l'écran d'affichage flexible (40) et étant disposé en correspondance avec la zone de pliage (401).

15. Le dispositif terminal selon la revendication 14, dans lequel le dispositif terminal est un dispositif terminal à écran pliable.
